(19) **Europäisches Patentamt / European Patent Office / Office européen des brevets**

(11) **EP 4 322 308 A1**

(12) # EUROPEAN PATENT APPLICATION
published in accordance with Art. 153(4) EPC

(43) Date of publication:
**14.02.2024 Bulletin 2024/07**

(21) Application number: **22784415.6**

(22) Date of filing: **10.03.2022**

(51) International Patent Classification (IPC):
$H01M\ 50/451^{(2021.01)}$    $H01M\ 10/0587^{(2010.01)}$
$H01M\ 50/414^{(2021.01)}$    $H01M\ 50/434^{(2021.01)}$
$H01M\ 50/443^{(2021.01)}$    $H01M\ 50/457^{(2021.01)}$
$H01M\ 50/489^{(2021.01)}$

(52) Cooperative Patent Classification (CPC):
**H01M 10/0587; H01M 50/414; H01M 50/434;
H01M 50/443; H01M 50/451; H01M 50/457;
H01M 50/489;** Y02E 60/10; Y02P 70/50

(86) International application number:
**PCT/JP2022/010607**

(87) International publication number:
**WO 2022/215430 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.04.2021 JP 2021066572**

(71) Applicant: **Panasonic Intellectual Property
Management Co., Ltd.
Kadoma-shi, Osaka 571-0057 (JP)**

(72) Inventors:
• **FURUSAWA Daisuke
  Kadoma-shi, Osaka 571-0057 (JP)**
• **YOKOYAMA Tomohiko
  Kadoma-shi, Osaka 571-0057 (JP)**

(74) Representative: **Novagraaf International SA
Chemin de l'Echo 3
1213 Onex, Geneva (CH)**

(54) **SEPARATOR AND CYLINDRICAL SECONDARY BATTERY IN WHICH SAME IS USED**

(57) The disclosed separator (50) is a separator of a belt shape having first and second long sides (50a) and (50b). The separator (50) includes a substrate (51), an inorganic filler layer (53) laminated on the substrate (51) and containing an inorganic filler as a major component, and a resin layer (54) laminated on part of the inorganic filler layer (53) and containing a resin as a major component. At least part of the resin layer (54) is formed in a first region (61) of a belt shape and a second region (62) of a belt shape. The first and second regions (61) and (62) extend adjacent to the first and second long sides (50a) and (50b), respectively. A portion where the resin layer is not formed is present in a third region (63) between the first region (61) and the second region (62).

**FIG. 1B**

EP 4 322 308 A1

## Description

[Technical Field]

The present disclosure relates to a separator and a cylindrical secondary battery using the same.

[Background Art]

A cylindrical secondary battery includes a case body having a bottomed cylindrical shape, and an electrode plate group disposed in the case body. The electrode plate group is formed by winding a positive electrode plate, a negative electrode plate, and a separator. Conventionally, various separators used in secondary batteries have been proposed.

For example, Patent Literature 1 (Japanese Laid-Open Patent Publication No. 2006-525624) discloses "a separator film for a battery, which is coated with a gel polymer over 40 to 60% of the total area of the separator film".

Patent Literature 2 (Japanese Laid-Open Patent Publication No. 2016-201327) discloses "a separator for a nonaqueous electrolyte secondary battery, the separator being in the form of a long sheet and including a substrate layer made of resin, and a heat-resistant layer formed on one surface of the substrate, in which the heat-resistant layer contains heat-resistant fine particles and a binder, the amount per unit volume of the binder contained in the heat-resistant layer at end portions in the width direction orthogonal to the longitudinal direction of the separator is larger than that in the heat-resistant layer at a center portion including at least the center in the width direction of the separator, and in the heat-resistant layer at the end portions, the amount per unit volume of the binder contained in a region relatively close to the substrate layer is larger than that in a surface region relatively close to the surface including the surface of the heat-resistant layer".

Patent Literature 3 (Japanese Laid-Open Patent Publication No. 2020-64879) discloses "a separator for a lithium-ion secondary battery, the separator including: a porous film; an inorganic particle layer which is formed on the surface of at least one side of the porous film and in which inorganic particles accounts for 80 vol% or more of the whole layer; and a porous resin layer formed on a surface of the inorganic particle layer and integrated with the inorganic particle layer".

[Citation List]

[Patent Literature]

Patent Literature 1: Japanese Laid-Open Patent Publication No. 2006-525624
Patent Literature 2: Japanese Laid-Open Patent Publication No. 2016-201327
Patent Literature 3: Japanese Laid-Open Patent Publication No. 2020-64879

[Summary of Invention]

[Technical Problem]

Further improvement in battery characteristics, including cycle characteristics, has been required for cylindrical secondary batteries. Under such circumstances, one object of the present disclosure is to provide a cylindrical secondary battery excellent in battery characteristics, including cycle characteristics, and a separator that can be used therefor.

While the novel features of the invention are set forth particularly in the appended claims, the invention, both as to organization and content, will be better understood and appreciated, along with other objects and features thereof, from the following detailed description taken in conjunction with the drawings.

[Solution to Problem]

One aspect of the present disclosure relates to a separator. The separator is a separator of a belt shape having first and second long sides, including: a substrate; an inorganic filler layer laminated on the substrate and containing an inorganic filler as a major component; and a resin layer laminated on part of the inorganic filler layer and containing a resin as a major component, wherein at least part of the resin layer is formed in a first region of a belt shape and a second region of a belt shape; the first and second regions extend adjacent to the first and second long sides, respectively; and a portion where the resin layer is not formed is present in a third region between the first region and the second region.

Another aspect of the present disclosure relates to a cylindrical secondary battery. The cylindrical secondary battery is a cylindrical secondary battery including: a battery case including a case body having a bottomed cylindrical shape; and an electrode plate group and an electrolyte that are disposed in the case body, wherein the electrode plate group is formed by winding a positive electrode plate, a negative electrode plate, and a separator, with the separator disposed between the positive electrode plate and the negative electrode plate, and the separator is the separator according to the present disclosure.

[Advantageous Effects of Invention]

According to the present disclosure, it is possible to realize a cylindrical secondary battery excellent in battery characteristics, including cycle characteristics.

[Brief Description of Drawings]

[FIG. 1A] A schematic top view of an example of a separator of Embodiment 1.
[FIG. 1B] A schematic cross-sectional view taken along the line IB-IB of FIG. 1A.
[FIG. 2] A schematic top view of another example of the separator of Embodiment 1.
[FIG. 3] A schematic top view of another example of the separator of Embodiment 1.
[FIG. 4] A schematic top view of another example of the separator of Embodiment 1.
[FIG. 5] A schematic top view of another example of the separator of Embodiment 1.
[FIG. 6] A schematic top view of another example of the separator of Embodiment 1.
[FIG. 7] A schematic top view of another example of the separator of Embodiment 1.
[FIG. 8] A schematic cross-sectional view of an example of a cylindrical secondary battery of Embodiment 2.
[FIG. 9] A schematic cross-sectional view of part of the cylindrical secondary battery of Embodiment 2.

[Description of Embodiments]

In the following, embodiments according to the present disclosure will be described by way of examples, but the present disclosure is not limited to the examples described below. In the following description, specific numerical values and materials are exemplified in some cases, but other numerical values and other materials may be applied as long as the effects of the present disclosure can be obtained. In the present specification, the phrase "a numerical value A to a numerical value B" means to include the numerical value A and the numerical value B, and can be rephrased as "a numerical value A or more and a numerical value B or less".

(Separator)

A separator according to the present disclosure is hereinafter sometimes referred to as a "separator (S)". The separator (S) of the present embodiment is a separator of a belt shape having first and second long sides. The separator (S) includes a substrate, an inorganic filler layer laminated on the substrate and containing an inorganic filler as a major component, and a resin layer laminated on part of the inorganic filler layer and containing a resin as a major component. At least part of the resin layer is formed in a first region of a belt shape and a second region of a belt shape. The first and second regions extend adjacent to the first and second long sides, respectively. A portion where the resin layer is not formed is present in a third region between the first region and the second region.
The separator (S) can be used as a separator for a battery, and particularly preferably used as a separator for a cylindrical secondary battery. Examples of the cylindrical secondary battery will be described later.
In the following, the inorganic filler layer and the resin layer laminated thereon are sometimes collectively referred to as a "layer (L)". The layer (L) is a layer laminated on the substrate. The layer (L) is laminated on at least one surface of the substrate. The layer (L) may be laminated on only one surface of the substrate. Alternatively, the layer (L) may be laminated on both surfaces of the substrate. In this case, the separator includes two layers (L).
The inorganic filler layer contains an inorganic filler as a major component. Specifically, the content of the inorganic filler in the inorganic filler layer is higher than 50 mass%, and may be 70 mass% or more, 80 mass% or more, or 90 mass% or more. The resin layer contains a resin as a major component. Specifically, the content of the resin in the resin layer is higher than 50 mass%, and may be 70 mass% or more, 80 mass% or more, or 90 mass% or more.
The inorganic filler layer functions as a heat-resistant layer. On the other hand, the inventors of the present application have found that when the heat-resistant layer is used, the cycle characteristics may deteriorate in some cases. The inventors of the present application have also found that, with the heat-resistant layer only, the heat resistance may be insufficient in some cases. The present disclosure is based on these new findings.

The separator of the present disclosure includes an inorganic filler layer and a resin layer. The inorganic filler layer can improve the heat resistance of the separator. By forming the resin layer on only part of the inorganic filler layer, the flow of the electrolyte is facilitated in the space where the resin layer is not formed, and this can improve the cycle characteristics. Furthermore, the resin layer can suppress the shrinkage of the separator, and this can further improve the heat resistance of the separator.

For the inorganic filler contained in the inorganic filler layer, an electrically insulating inorganic filler can be used. Examples of the material of the insulating inorganic filler include insulating metal compounds (metal oxides, metal nitrides, metal carbides, etc.), and include, for example, aluminum oxide (alumina), titanium oxide (titania), silica, zirconium oxide (zirconia), magnesium oxide (magnesia), etc. The shape of the inorganic filler may be of any shape, and may be particulate (spherical, scaly, etc.) or fibrous. The inorganic filler layer may contain only one kind of inorganic filler, or may contain a plurality of kinds of inorganic fillers. The inorganic filler may be a known insulating inorganic filler used in secondary batteries.

The average particle diameter of the inorganic filler particles may be selected depending on the thickness of the inorganic filler layer. The average particle diameter (median diameter in a volume-based particle size distribution) of the inorganic filler particles may be 2 $\mu$m or less (e.g., 1 $\mu$m or less). The average particle diameter of the inorganic filler particles may be 50 nm or more, and may be in the range of 50 nm to 2 $\mu$m. Here, the average particle diameter refers to a median diameter ($D_{50}$) at 50% cumulative volume in a volume-based particle size distribution. The median diameter is determined using, for example, a laser diffraction/scattering type particle size distribution analyzer.

The inorganic filler layer preferably contains a binder, and may further contain other components. Examples of the binder include fluorocarbon resins, acrylic resins, natural rubbers, synthetic rubbers, etc. For example, examples of the binder include polyvinylidene fluoride (PVdF), styrene-butadiene rubber, acrylonitrile-butadiene rubber, polymethylmethacrylate, polyethylene, nitrocellulose, etc. The binder may be a known binder used in secondary batteries.

The inorganic filler layer is preferably formed almost all over a surface to be formed with the layer (L) of the surfaces of the substrate. The inorganic filler layer is preferably formed over 80 to 100% (e.g., 90 to 100%, or 95 to 100%) of the area of a surface to be formed with the layer (L) of the surfaces of the substrate. In a typical example, the inorganic filler layer is formed all over a surface to be formed with the layer (L) of the surfaces of the substrate.

The thickness of the inorganic filler layer is selected within an appropriate range, in consideration of the influence on the characteristics (heat resistance, etc.) of the battery. The thickness of the inorganic filler layer may be in the range of 1 $\mu$m to 20 $\mu$m (e.g., in the range of 2 $\mu$m to 8 $\mu$m).

As mentioned above, the resin layer contains a resin as a major component. For the resin as a major component, an insulating resin can be used. Examples of the insulating resin include fluorocarbon resins, acrylic resins, etc. For example, examples of the resin include polyvinylidene fluoride, polyacrylonitrile, polyacrylic acid, etc.

The resin as a major component of the resin layer and the binder contained in the inorganic filler layer may be the same as or different from each other. When the two are the same, the adhesiveness between the inorganic filler layer and the resin layer can be enhanced.

The resin layer may contain a component other than the resin. For example, the resin layer may contain an inorganic filler. However, the content of the inorganic filler in the resin layer is less than 50 mass%, and is, for example, 20 mass% or less, or 10 mass% or less. Examples of the inorganic filler contained in the resin layer include the inorganic fillers exemplified as the inorganic filler for the inorganic filler layer.

The thickness of the resin layer may be selected within an appropriate range, in consideration of the influence on the characteristics (heat resistance, cycle characteristics, etc.) of the battery. The thickness of the resin layer may be in the range of 0.2 $\mu$m to 20 $\mu$m (e.g., in the range of 1 $\mu$m to 8 $\mu$m).

Examples of the substrate include porous films, woven fabrics, and non-woven fabrics which are made of an insulating resin. Examples of the insulating resin include polyolefin-based resins, polyester-based resins, etc. Preferred examples of the substrate include polyethylene, polypropylene, polyethylene terephthalate, polybutylene terephthalate, polyvinylidene fluoride, etc.

The thickness of the substrate may be selected in consideration of the type and structure of the battery to be used. The thickness of the substrate may be in the range of 5 $\mu$m to 20 $\mu$m (e.g., in the range of 8 $\mu$m to 15 $\mu$m).

The proportion (%) of an area where the resin layer is formed in the first and second regions is preferably higher than the proportion (%) of an area where the resin layer is formed in the third region. According to this configuration, the resin layers formed in the first and second regions serve to increase the frictional force between the separator and the electrode plate. In order to increase the frictional force between the separator and the electrode plate and thereby to improve the heat resistance, increasing the proportion of the resin layer in the first and second regions is important. On the other hand, by decreasing the proportion of the area where the resin is formed in the third region, the fluidity of the electrolyte in the third region can be enhanced. As a result, the battery characteristics, including cycle characteristics, can be particularly improved.

The width of the first region and the width of the second region are each preferably 30% or less (e.g., 25% or less, or 20% or less) of the width of the separator (the width of the substrate). According to this configuration, the space formed in the third region can be increased. The width of the first region and the width of the second region may be each in the range of 5 to 30% of the width of the separator (e.g., in the range of 10 to 25%, or in the range of 10 to 20%). The width of the first region and the width of the second region are usually almost the same or the same. The width of the first region may be in the range of 70 to 140% (e.g., in the range of 80 to 125%) of the width of the second region. In the present specification, the width of the separator means the length of the separator in the direction orthogonal to the longitudinal direction of the separator. Likewise, the width of each region of the separator means the width of each region in the direction orthogonal to the longitudinal direction of the separator. The width of the electrode plate means the length of the electrode plate in the direction orthogonal to the longitudinal direction of the electrode plate.

The third region may include a fourth region of a belt shape extending parallel to the first region. In the fourth region, the resin layer is formed. Note that the third region may include a plurality of fourth regions each in a belt shape. The resin layers formed in the first, second, and fourth regions may be arranged in stripes along the longitudinal direction of the separator.

In the third region, the resin layer may or may not be formed. Note that, however, the resin layer is not formed in all the third region.

The average thickness Dr ($\mu$m) of the resin layer may be 0.47 times or less as large as the sum Ds ($\mu$m) of the average thicknesses of the substrate and the inorganic filler layer. Here, each of the average thicknesses is calculated by the following procedures. First, a cross section of the separator is produced by ion milling. Next, an image of the cross section of the separator is acquired using a scanning electron microscope (SEM). The thicknesses at five or more points of the separator are measured from the obtained cross-sectional image, and an average value of the measured thicknesses is determined as the average thickness Dr.

The proportion of an area where the resin layer is formed in the first and second regions may be in the range of 5 to 100% (e.g., in the range of 30 to 100%, in the range of 50 to 100%, or in the range of 80 to 100%).

The resin layer may be formed over the entire surfaces of the first region and the second region. In this case, the sum Wr (mm) of the widths of the first region and the second region, the width Ws (mm) of the separator, and the shrinkage rate R (%) of the separator in the width direction of the separator when heated at 200 °C for 10 minutes may satisfy $(R/100) \times Ws \times 0.25 \leq Wr$.

The resin layer preferably has voids. Likewise, the inorganic filler layer preferably has voids. The percentage of voids in the resin layer may be in the range of about 40 to 80%. The percentage of voids in the filler layer may be in the range of about 50 to 80%. When these layers have voids, the electrolyte permeates into the voids, and the ionic conductivity is improved. The resin layer having voids can be formed by applying a resin and a plasticizer (solvent) which are kneaded together, onto the inorganic filler layer, followed by washing to extract the plasticizer. The inorganic filler layer having voids can be formed by adjusting the binder ratio, particle shape, and particle size distribution. Note that, since voids occur between inorganic fillers, an inorganic filler layer having voids can be formed by forming an inorganic filler layer by an ordinary method.

The separator (S) preferably satisfies the following condition (1), and preferably further satisfies one, two, three, or four of the following conditions (2) to (5). The separator (S) may satisfy all of the following conditions (1) to (5).

(1) The proportion (%) of the area where the resin layer is formed in the first and second regions is higher than the proportion (%) of the area where the resin layer is formed in the third region. The latter proportion may be in the range of 0 to 0.5 times as large as the former proportion (e.g., in the range of 0 to 0.2 times).
(2) In the first and second regions, the proportion of the area where the resin layer is formed is in the range of 5 to 100% (e.g., in the range of 30 to 100%, in the range of 50 to 100%, or in the range of 80 to 100%).
(3) The width W1 of the first region and the width W2 of the second region may be each in the range of 5 to 30% (e.g., in the range of 5 to 25%, or in the range of 10 to 20%) of the width Ws of the separator (the width of the substrate). A region sandwiched between the first long side of the separator and a line at a distance of L1 from the first long side may be regarded as a first region, and a region sandwiched between the second long side of the separator and a line at a distance of L2 from the second long side may be regarded as a second region. Each of the distance L1 and the distance L2 may be selected from the lengths exemplified for the width W1 above.
(4) The area of the portion where the resin layer is formed in the third region is in the range of 0 to 0.8 times (e.g., in the range of 0 to 0.5 times, or in the range of 0 to 0.3 times) as large as the area where the resin layer is formed in the first and second regions.
(5) The resin layer is formed in a plurality of stripes and/or like a plurality of dotted islands. When the resin layers are arranged in stripes, the stripes may be constituted of intermittently formed resin layers.

(Production method of separator (S))

Any production method may be adopted as long as the separator (S) can be produced. An example of the production method will be described below. First, a substrate is provided. The substrate may be a commercially available substrate. Alternatively, the substrate may be produced based on a known method. Next, an inorganic filler layer is formed on the substrate. The inorganic filler layer can be formed by, for example, applying a slurry containing an inorganic filler, followed by drying. The slurry can be prepared by mixing a material including a binder and an inorganic filler. The material may contain a dispersion medium (water etc.). Next, a resin layer is formed on part of the inorganic filler layer. The resin layer may be formed by, for example, applying and curing a resin composition serving as a material of the resin layer. The methods of applying the slurry and the resin composition are not limited, and known methods may be adopted. The slurry and the resin composition may be applied by screen printing, transferring, or other methods, or may be applied by ink-jetting or other methods.

(Cylindrical secondary battery)

A cylindrical secondary battery according to the present disclosure is hereinafter sometimes referred to as a "battery (B)". The battery (B) of the present embodiment includes a battery case including a case body having a bottomed cylindrical shape, and an electrode plate group and an electrolyte that are disposed in the case body. The case body is sealed with a sealing body, a gasket, and the like. The electrode plate group is formed by winding a positive electrode plate, a negative electrode plate, and a separator, with the separator disposed between the positive electrode plate and the negative electrode plate. The separator is the above-described separator (separator (S)) of the present embodiment. With the separator (S), a cylindrical secondary battery having excellent heat resistance and cycle characteristics can be obtained.

Examples of the cylindrical secondary battery include a nonaqueous electrolyte secondary battery, such as a lithium-ion secondary battery, and the like. The cylindrical secondary battery may be a nonaqueous electrolyte secondary battery containing nonaqueous electrolyte.

When the separator (S) includes only one layer (L), the layer (L) may be laminated at a surface facing the positive electrode plate or a surface facing the negative electrode plate, of the two surfaces of the separator (S). In view of the oxidation resistance of PE (polyethylene) which is often used as the substrate, the layer (L) is preferably laminated at the surface on the side facing the positive electrode. In this case, the substrate of the separator (S) is adjacent to the negative electrode plate, and the resin layer is adjacent to the positive electrode plate.

The average thickness Dr ($\mu$m) of the resin layer of the separator is 0.004 times or more (e.g., 0.004 to 0.1 times) as large as the difference Dn ($\mu$m) between an average thickness of the negative electrode plate in a fully charged state and an average thickness of the negative electrode plate in a discharged state. According to this configuration, even when the negative electrode plate expands during charging, a sufficient space can be secured between the inorganic filler layer and the electrode plate. Here, the fully charged state means a state reached when a battery is charged at a constant current (specifically, a current equivalent to 0.5C) until the battery voltage reaches 4.2 V, and then continuously charged at a constant voltage until the current drops to a current value equivalent to 0.02C. The discharged state means a state reached when a battery in the fully charged state is discharged at a constant current (specifically, a current equivalent to 1C), and then continuously discharged until the battery voltage reaches 2.5 V The average thickness of the negative electrode plate is determined by the following method. First, a battery in the charged state and a battery in the discharged state are prepared and disassembled, to take out the negative electrode plate from each of them. Next, with respect to each of the negative electrode plates taken out, the thickness is measured at randomly selected 10 or more points with a contact-type thickness meter. The average value of the measured thicknesses is calculated as the average thickness of each of the negative electrode plates. Then, the difference Dn is determined from the following equation.

$$\text{Difference Dn} = (\text{average thickness of negative electrode plate in fully charged state}) -$$

$$(\text{average thickness of negative electrode plate in discharged state})$$

The width Ws (mm) of the separator is preferably larger than the width Wp (mm) of the positive electrode plate and the width Wn (mm) of the negative electrode plate. The width W3 of the third region may be 0.4 times or more as large as the width Wn of the negative electrode plate, and may be in the range of 0.4 to 0.95 times. When the width W3 is set to 0.4 times or more as large as the width Wn, a sufficient space can be provided between the inorganic filler layer and the electrode plate.

A widthwise end of the electrode plate adjacent to the resin layer is preferably in contact with the resin layer present in the first region or the second region. That is, the width of the electrode plate adjacent to the resin layer is preferably larger than the width W3 and smaller than the width Ws. According to this configuration, the displacement between the separator and the electrode plate can be particularly suppressed. Likewise, the width of the electrode plate not adjacent to the resin layer is preferably larger than the width W3 and smaller than the width Ws. Here, when the electrode plate adjacent to the resin layer is a positive electrode plate, the electrode plate not adjacent to the resin layer is a negative electrode plate, and when the electrode plate adjacent to the resin layer is a negative electrode plate, the electrode plate not adjacent to the resin layer is a positive electrode plate. That is, the width Wp of the positive electrode plate and the width Wn of the negative electrode plate are each preferably larger than the width W3 and smaller than the width Ws.

Except for using the separator (S), a method for producing the battery (B) is not limited, and the battery may be produced by a known method.

The following will describe an example of the configuration of the cylindrical battery (B) according to the present embodiment. Note that, however, except for the essential configuration of the battery (B), the battery configuration is not limited to the example illustrated below. For the components that are not specifically described, known components may be used. In the following, an example in which the battery (B) is a nonaqueous electrolyte secondary battery (more specifically, a lithium-ion secondary battery) will be mainly described. When the battery (B) is another battery, materials are changed according to the type of the battery.

(Positive electrode plate)

The positive electrode plate includes a positive electrode current collector, and a positive electrode active material layer formed on the positive electrode current collector. The positive electrode current collector may be a metal foil. Examples of the material of the positive electrode current collector include aluminum, an aluminum alloy, titanium, a titanium alloy, stainless steel, etc. The thickness of the positive electrode current collector may be, for example, in the range of 5 to 300 $\mu$m.

The positive electrode active material layer contains a positive electrode active material, and may contain other substances (a binder, a conductive agent, etc.) as needed. The positive electrode active material and other substances are not limited, and known substances may be used. When the battery (B) is a lithium-ion secondary battery, examples of the positive electrode active material include a substance that reversibly absorbs and releases lithium ions. Specifically, examples of the positive electrode active material include a lithium-containing metal oxide, etc. Examples of the lithium-containing metal oxide include a lithium-transition metal composite oxide, a lithium-nickel-cobalt-aluminum composite oxide, etc. Examples of the lithium-transition metal composite oxide include a lithium-manganese composite oxide (e.g., $LiMn_2O_4$), a lithium-nickel composite oxide (e.g., $LiNiO_2$), a lithium-cobalt composite oxide (e.g., $LiCoO_2$), composite oxides in which part of these transition metal elements is replaced with another metal element (typical metal element and/or transition metal element), etc.

(Negative electrode plate)

The negative electrode plate includes a negative electrode current collector, and a negative electrode active material layer formed on the negative electrode current collector. The negative electrode current collector may be a metal foil. Examples of the metal material of the negative electrode current collector include copper, nickel, iron, alloys containing these metal elements (a copper alloy, stainless steel, etc.), etc. The thickness of the negative electrode current collector may be, for example, in the range of 5 to 300 $\mu$m.

The negative electrode active material layer contains a negative electrode active material, and may contain other substances (a binder, a conductive agent, a thickener, etc.) as needed. The negative electrode active material and other substances are not limited, and known substances may be used.

When the battery (B) is a lithium-ion secondary battery, examples of the negative electrode active material include a substance that reversibly absorbs and releases lithium ions. Specifically, examples of the negative electrode active material include a carbon material, silicon, a silicon compound, a lithium alloy, etc. Examples of the carbon material include graphite, coke, partly graphitized carbon, graphitized carbon fibers, amorphous carbon, etc.

(Electrolyte)

An electrolyte (liquid electrolyte) that can be used when the battery (B) is a nonaqueous electrolyte secondary battery, such as a lithium-ion secondary battery, is a nonaqueous electrolyte having lithium ion conductivity. A typical nonaqueous electrolyte contains a nonaqueous solvent, and lithium ions and anions dissolved in the nonaqueous solvent. The nonaqueous electrolyte may be in the form of liquid or in the form of gel containing a matrix polymer. A nonaqueous electrolyte in the form of liquid can be prepared by dissolving a lithium salt in a nonaqueous solvent. When the lithium salt (salt of lithium ion and anion) is dissolved in a nonaqueous solvent, lithium ions and anions are produced. The nonaqueous electrolyte is not particularly limited, and may be an electrolyte used in nonaqueous electrolyte batteries.

Examples of the anion in the lithium salt include $BF_4^-$, $ClO_4^-$, $PF_6^-$, $CF_3SO_3^-$, $CF_3CO_2^-$, anions of imides, anions of oxalate complexes, etc.

Examples of the nonaqueous solvent include esters, ethers, nitriles, amides, halogen-substituted products thereof (e.g., fluorides), etc. The nonaqueous electrolyte may contain only one kind of these nonaqueous solvents, or may contain two or more kinds thereof.

Examples of the esters include carbonic acid esters, carboxylic acid esters, etc. Examples of cyclic carbonic acid esters include ethylene carbonate, propylene carbonate, fluoroethylene carbonate (FEC), etc. Examples of chain carbonic acid esters include dimethyl carbonate, ethyl methyl carbonate, diethyl carbonate, etc. Examples of cyclic carboxylic acid esters include γ-butyrolactone, γ-valerolactone, etc. Examples of chain carboxylic acid esters include ethyl acetate, methyl propionate, methyl fluoropropionate, etc.

(Battery case)

A typical battery case includes a case body, a sealing body, and a gasket disposed between the case body and the sealing body. The case body is a bottomed cylindrical case having an opening. For the battery case, a known battery case may be used.

In the following, examples of the separator (S) and the battery (B) according to the present disclosure will be specifically described with reference to the drawings. The components of the separator and the battery described below can be changed based on the description above. The matters described below may be applied to the above embodiments. The components which are not essential to the separator (S) and the battery (B) according to the present disclosure can be omitted. In the drawings below, in order to facilitate understanding, components are drawn with different scales, in some cases.

(Embodiment 1)

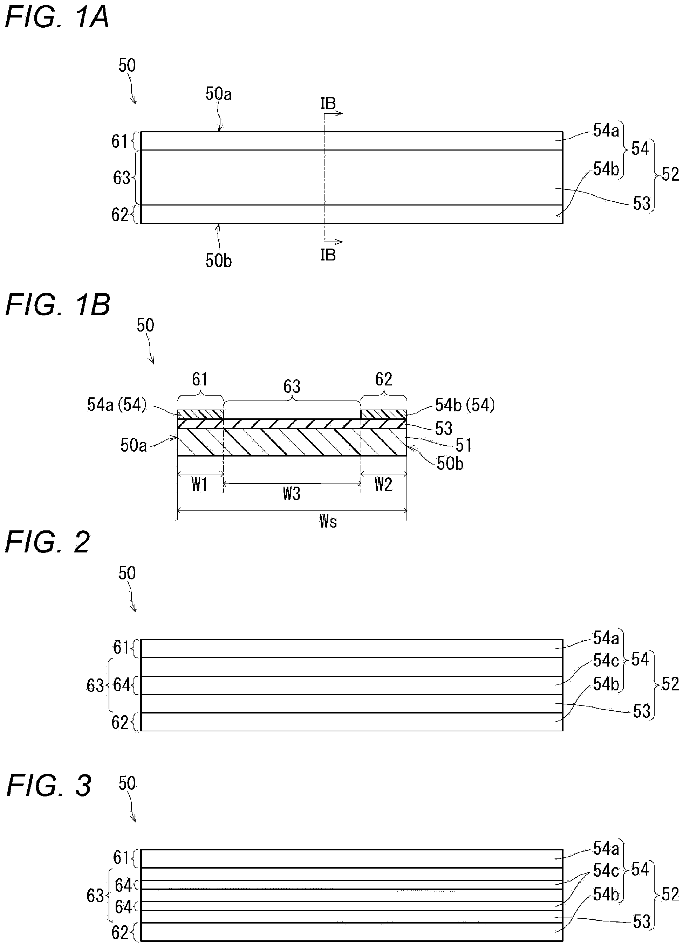

In Embodiment 1, an example of the separator (S) will be described. A separator 50 of Embodiment 1 is schematically illustrated by a top view in FIG. 1A, and by a cross-sectional view taken along the line IB-IB of FIG. 1A in FIG. 1B. The separator 50 has a belt shape (elongated rectangular shape) having a first long side 50a and a second long side 50b. The separator 50 includes a substrate 51 of a belt shape and a layer 52 laminated on one surface of the substrate 51. The layer 52 includes an inorganic filler layer 53 and a resin layer 54. The inorganic filler layer 53 is formed all over the surface of one side of the substrate 51.

At least part of the resin layer 54 is formed in a first region 61 of a belt shape and a second region 62 of a belt shape. The first region 61 and the second region 62 extend adjacent to the first long side 50a and the second long side 50b, respectively. In a third region 63 between the first region 61 and the second region 62, a portion where the resin layer 54 is not formed is present. In the example shown in FIG. 1A, the resin layer 54 includes a first resin layer 54a and a second resin layer 54b formed in stripes. The region where the first resin layer 54a is formed corresponds to the first region 61, and the region where the second resin layer 54b is formed corresponds to the second region 62. In one point of view, the first long side 50a coincides with one long side of the first region 61, and one long side of the second region 62 coincides with one long side of the second region 62.

In the separator 50 illustrated in FIG. 1A, the resin layer 54 is formed over the entire surfaces of the first region 61 and the second region 62, and in the third region 63, the resin layer 54 is not formed. In FIG. 1B, the width W1 of the first region 61 (the length in the direction perpendicular to the longitudinal direction), the width W2 of the second region 62, the width W3 of the third region 63, and the width Ws of the separator 50 (the width of the substrate 51) are indicated.

The resin layer 54 may be formed in part of the third region 63. An example of the separator 50 including the above resin layer 54 is schematically shown by a top view in FIG. 2, and another example is schematically shown by a top view in FIG. 3. In the examples shown in FIGS. 2 and 3, the third region 63 includes a fourth region 64 of a belt shape extending parallel to the first region 61. A third resin layer 54c of a belt-shape is formed over the entire surface of the fourth region 64.

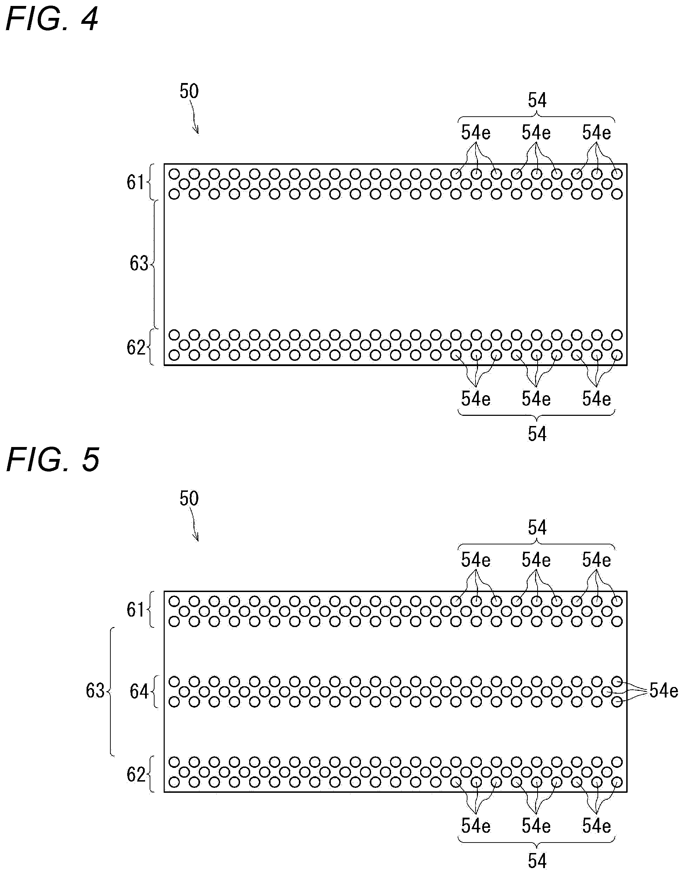

The resin layer 54 may be formed like dotted islands. Examples of the separator 50 including the above resin layer 54 are schematically shown by a top view in FIGS. 4 to 7. In FIGS. 4 to 7, the resin layer 54 includes resin layers 54e dotted like islands. Note that a belt-shaped resin layer and island-like resin layers may be used in combination.

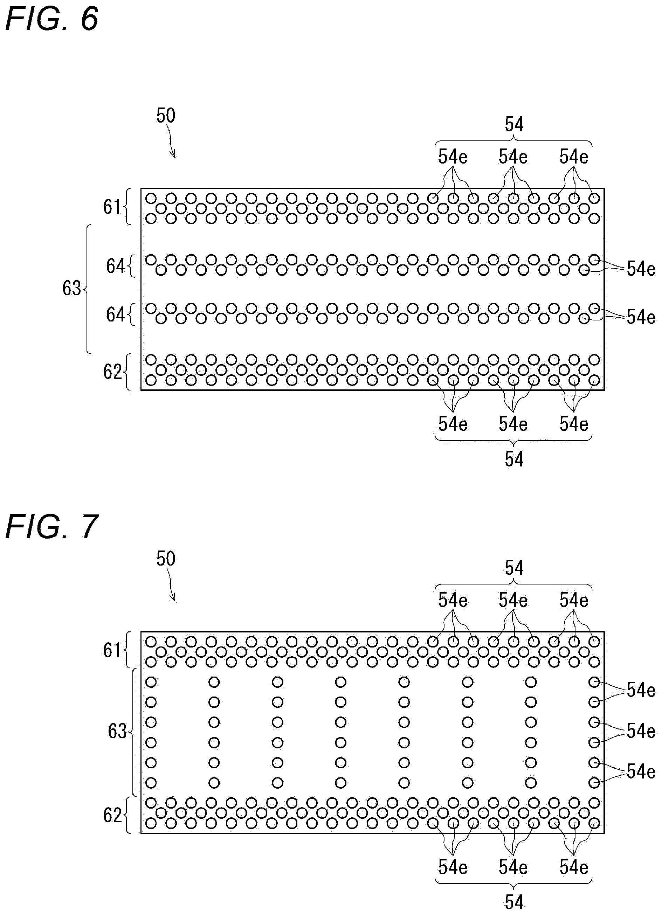

In the example shown in FIG. 4, the island-like resin layers 54e are formed only in the first region 61 and the second region 62. In the examples shown in FIGS. 5 and 6, the island-like resin layers 54e are formed only in the first region 61, the second region 62, and the fourth region 64. In the example shown in FIG. 7, the island-like resin layers 54 are formed in the first region 61, the second region 62, and part of the third region 63. Note that the arrangements of the resin layer 54 shown in the figures are exemplary illustrations, and other arrangements may be adopted.

(Embodiment 2)

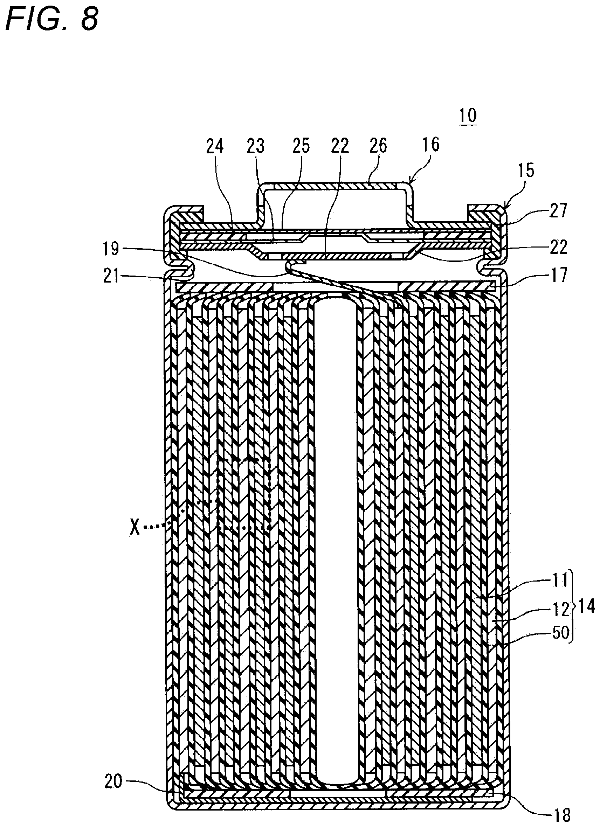

In Embodiment 2, an example of the battery (B) will be described. A battery 10 of Embodiment 2 is schematically shown by a cross-sectional view in FIG. 8. The battery 10 is a cylindrical secondary battery. The battery 10 includes a battery case including a case body 15, and an electrode plate group 14 and a liquid electrolyte (not shown) housed in the case body 15. The case body 15 is a bottomed cylindrical case made of metal. The battery case is constituted of the case body 15, and a sealing member 16 and a gasket 27 which seal the opening of the case body 15. The side wall of the case body 15 has a step portion 21 formed annularly along the circumferential direction of the case body 15. The sealing member 16 is disposed on the step portion 21 on the side facing the opening. The sealing body 16 includes a filter 22, a lower valve body 23, an insulating member 24, an upper valve body 25, and a cap 26 which are disposed in this order from the inside of the case body 15. In the case body 15, an insulating plate 17 and an insulating plate 18 are respectively disposed at both ends of the electrode plate group 14.

The electrode plate group 14 is constituted of a positive electrode plate 11 of a belt shape, a negative electrode plate 12 of a belt shape, and a separator 50 of a belt shape. Specifically, the electrode plate group 14 is formed by winding them, with the separator 50 disposed between the positive electrode plate 11 and the negative electrode plate 12. The separator 50 is the above-described separator (S).

The positive electrode plate 11 is electrically connected, via a positive electrode lead 19, to a cap 26 serving as a positive electrode terminal. The negative electrode plate 12 is electrically connected, via a negative electrode lead 20, to the case body 15 serving as a negative electrode terminal.

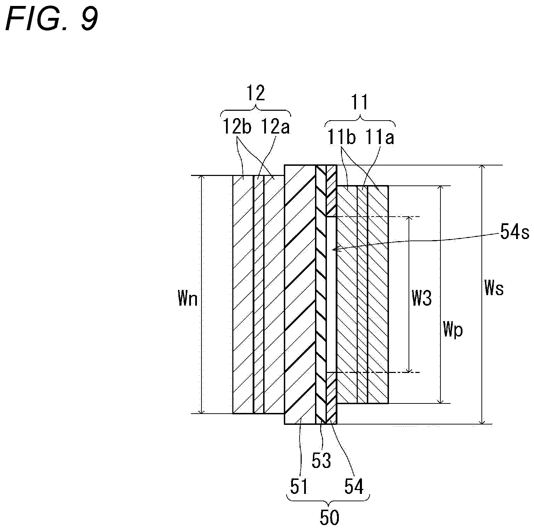

In FIG. 8, a gap (gap through which the liquid electrolyte can flow) is present in the inside of the electrode plate group 14 (e.g., the region surrounded by the dotted line X). The gap is resulted from the resin layer 54 not formed over the entire surface of the inorganic filler layer 53. Part of the electrode plate group 14 is schematically shown by an enlarged view in FIG. 9. FIG. 9 shows an example using the separator 50 illustrated in FIG. 1A. In FIG. 9, the width Ws of the separator 50, the width W3 of the third region, the width Wp of the positive electrode plate 11, and the width Wn of the negative electrode plate 12 are indicated.

The positive electrode plate 11 includes a positive electrode current collector 11a, and positive electrode active material layers 1 1b formed on both surfaces of the positive electrode current collector 11a. The negative electrode plate 12 includes a negative electrode current collector 12a, and negative electrode active material layers 12b formed on both surfaces of the negative electrode current collector 12a.

In the example illustrated in FIG. 9, the inorganic filler layer 53 and the resin layer 54 are formed on, of the surfaces of the substrate 51, a surface on the side facing the positive electrode plate 11. Since the resin layer 54 is not formed in the third region 63, there can be a gap 54s through which the liquid electrolyte can flow. Therefore, the fluidity of the liquid electrolyte is enhanced, and as a result, the battery characteristics, including cycle characteristics, can be particularly improved. When the resin layer 54 is formed like islands, the gap 54s without the resin layer 54 can be dispersedly present. As a result, the cycle characteristics can be particularly improved. On the other hand, when the resin layer 54 is formed in stripes, the frictional force between the electrode plate (the positive electrode plate 11 in the example illustrated in FIG. 9) and the separator 50 can be enhanced. As a result, the battery characteristics, including heat resistance, can be particularly improved.

[Examples]

The present disclosure will be more specifically described below by way of Examples.

(Experimental Example 1)

In Example 1, with the separator mainly changed, a plurality of cylindrical secondary batteries were produced and evaluated. The secondary battery was produced by the following method.

(Production of positive electrode plate)

To 100 parts by mass of lithium nickel cobaltate (positive electrode active material), 4 parts by mass of acetylene black (conductive agent), and 4 parts by mass of polyvinylidene fluoride (PVdF, binder), N-methyl-2-pyrrolidone (NMP, dispersion medium) was added and mixed, to prepare a positive electrode slurry. The positive electrode slurry was applied onto both surfaces of an aluminum foil (thickness 15 μm) serving as a positive electrode current collector, dried, and then compressed. In this way, a plurality of kinds of positive electrode plates (thickness 0.15 to 0.35 mm) differing in thickness were produced. The reason why the thickness of the positive electrode plate was changed was to maintain constant the ratio between the positive electrode capacity and the negative electrode capacity, so that the cycle test evaluation results can be compared. Next, a positive electrode current collector lead made of aluminum was connected to the positive electrode current collector. When the width of the separator was 68 mm, the width of the positive electrode plate was set to 62.5 mm. When the width of the separator was 53 mm, the width of the positive electrode plate was set to 47.5 mm.

(Production of negative electrode plate)

A mixture was obtained by mixing 94 parts by mass of artificial graphite powder (negative electrode active material), 6 parts by mass of $SiO_x$ where $0.5 \leq x < 1.6$, 1 part by mass of styrene-butadiene rubber (binder), and 1 part by mass of carboxymethyl cellulose (CMC, thickener). The obtained mixture was dispersed in deionized water, to prepare a negative electrode slurry. The negative electrode slurry was applied onto both surfaces of a copper foil (thickness 8 $\mu$m) serving as a negative electrode current collector, dried, and then compressed. In this way, a plurality of kinds of negative electrode plates 12 (thickness 0.17 to 0.4 mm) differing in thickness were produced. Furthermore, a negative electrode current collector lead made of nickel was connected to the negative electrode current collector. When the width of the separator was 68 mm, the width of the negative electrode plate was set to 65 mm. When the width of the separator was 53 mm, the width of the negative plate was set to 50 mm. The amount of expansion of the negative electrode plate was changed by changing the thickness of the negative electrode plate.

(Production of separator)

First, a porous film made of polyethylene (average thickness: 10 $\mu$m) was provided as a substrate. The width of the substrate was set to 53 mm or 68 mm. Next, an inorganic filler layer was formed all over the surface of one side of the substrate. In addition, a resin layer arranged as illustrated in FIG. 1A was formed. In this way, a plurality of kinds of separators were formed, with the width (W1 and W2 in FIG. 1B) and the thickness of the resin layer changed. Here, W1 and W2 were set to the same width. The shrinkage rate of the separator was changed by changing the degree of polymerization of polyethylene as the substrate.

The inorganic filler layer was formed by applying a slurry containing an inorganic filler onto a substrate, followed by drying. The slurry was prepared by mixing alumina particles (inorganic filler), polyvinylidene fluoride (PVdF, binder), and NMP (dispersion medium) in a mass ratio of alumina:PVdF:NMP = 19.4:0.6:80. The slurry was applied by gravure coating. The resin layer was formed by applying a resin composition onto the inorganic filler layer, followed by drying. The resin composition was prepared by mixing polyvinylidene fluoride (PVdF, insulating resin) and NMP (liquid component). The resin composition was applied by gravure coating. The thicknesses of the inorganic filler layer and the resin layer were changed by changing the coating amounts of the slurry and the resin composition, respectively.

(Production of battery)

An electrode plate group was formed by winding the positive electrode plate, the negative electrode plate, and the separator, with the separator disposed between the positive electrode plate and the negative electrode plate. At this time, as shown in FIG. 9, the separator was disposed such that the inorganic filler layer and the resin layer faced the positive electrode plate.

Next, the obtained electrode plate group and a liquid electrolyte were housed in a battery case, to produce a cylindrical nonaqueous electrolyte secondary battery. The liquid electrolyte was prepared by mixing ethylene carbonate (EC), ethyl methyl carbonate (EMC), and dimethyl carbonate (DMC) in a volume ratio of 3:3:4, and dissolving $LiPF_6$ at a concentration of 1 mol/L in the mixed solvent. In this way, a plurality of kinds of batteries differing mainly in the separator were produced. The produced separators and batteries were subjected to the following evaluation.

(1) Measurement of average thickness of each layer constituting separator

The average thicknesses of the substrate, the inorganic filler layer, and the resin layer constituting the separator were measured by the aforementioned method.

(2) Shrinkage rate of separator

Two sheets made of polytetrafluoroethylene were placed between two glass plates (per one glass plate, thickness: 1.0 to 1.2 mm, width: 25.4 mm, length: 76.2 mm), and the separator was sandwiched between the two sheets made of polytetrafluoroethylene, to prepare a sample for measurement. The sample was held horizontally. Then, the sample was placed on a hot plate, with a weight (500 g) placed on the upper glass plate, and the sample was heated with the hot plate. The heating was performed at 200 °C for 10 minutes. The width Ws(0) of the separator before heating and the width Ws(1) of the separator after heating were measured. Then, the shrinkage rate R (%) of the separator was determined using the following equation.

$$\text{Shrinkage rate R } (\%) = 100 \times Ws(1) / Ws(0)$$

(3) Cycle test and discharge capacity retention rate of battery

As a cycle test of the battery, 300 charge-discharge cycles were performed at 25 °C, each cycle consisting of a discharge process and a charge-discharge process. The discharge process was performed under the condition of discharging at a current value equivalent to a constant current of 1C, until the battery voltage dropped to 2.5 V (rated capacity: 3500 to 4500 mAh). The charging process was performed under the condition of charging at a current value equivalent to a constant current of 0.5C, until the battery voltage reached 4.2 V, and then, charged at the constant voltage, until reaching a current value equivalent to 0.02C. Then, the discharge capacity X(0) before the cycle test and the discharge capacity X(300) after 300 charge-discharge cycles were measured. From the measured values, the discharge capacity retention rate (%) was obtained using the following equation.

$$\text{Discharge capacity retention rate } (\%) = 100 \times X(300) / X(0)$$

(4) Heating test of battery

The battery was placed in a constant temperature bath, and the internal temperature of the constant temperature bath was raised at a temperature raising rate of 5 °C/min to an arbitrary set temperature. At that time, the temperature at which the battery was shortcircuited was measured as a short-circuit temperature Y (°C).

(5) Evaluation of internal resistance of battery

The internal resistance of the battery was measured with an alternating current of 1 KHz. Then, the resistance increase rate (%) was determined using the following equation. Resistance increase rate (%) = 100 × (internal resistance of evaluation battery) / (internal resistance of comparative battery without resin layer)
Here, the "comparative battery without resin layer" is any one of the batteries C1 to C3 including a separator without the resin layer. Specifically, of the batteries C1 to C3, the battery including a separator having the same width Ws and the same total Ds as those of the separator (with the resin layer) in the evaluation battery is defined as the "comparative battery without resin layer".

(6) Amount of expansion of negative electrode plate

The amount of expansion of the negative electrode plate was determined by subtracting the average thickness of the negative electrode plate taken out from a battery in the discharged state from the average thickness of the negative electrode plate taken out from the battery in the fully charged state.
Some of the battery production conditions and evaluation results are shown in Table 1. The "total Ds" in Table 1 indicates a total Ds of the average thickness of the substrate and the average thickness of the inorganic filler layer. Table 2 is a table obtained by processing part of the data in Table 1. In Table 2, the ratio Q is a ratio represented by the following equation. Ratio Q = Wr / ((R/100) × Ws × 0.25)
(in the equation, Wr is a sum of the width W1 of the first region and the width W2 of the second region. R is a shrinkage rate (%) of the separator. Ws is a width of the separator. When the ratio Q is 1 or more, (R/100) × Ws × 0.25 ≤ Wr.)

[Table 1]

| battery | separator width Ws [mm] | separator width W1 [mm] | separator width W3 [mm] | separator total Ds [μm] | separator ave. thickness Dr of resin layer [μm] | shrinkage rate of separator [%] | width Wn of negative electrode plate [mm] | amount of expansion of negative electrode plate [μm] (thickness of negative electrode: mm) | discharge capacity retention rate [%] | heating test short-circuit temperature Y [°C] | resistance increase rate [%] |
|---|---|---|---|---|---|---|---|---|---|---|---|
| C1 | 68 | 0 | 0 | 15 | 0 | 20 | 65 | 70 (0.29 mm) | 85.2 | 135 | - |
| C2 | 68 | 0 | 0 | 12 | 0 | 20 | 65 | 70 (0.29 mm) | 85.3 | 135 | - |
| C3 | 53 | 0 | 0 | 15 | 0 | 20 | 50 | 70 (0.29 mm) | 85.5 | 135 | - |
| C4 | 68 | 34 | 0 | 15 | 0.3 | 20 | 65 | 70 (0.29 mm) | 85.2 | 150 | 100.2 |
| C5 | 68 | 34 | 0 | 12 | 7 | 20 | 65 | 70 (0.29 mm) | 85.3 | 150 | 104.8 |
| A1 | 68 | 20 | 28 | 15 | 0.3 | 20 | 65 | 70 (0.29 mm) | 90.0 | 145 | 100.2 |
| A2 | 68 | 3 | 62 | 15 | 0.3 | 20 | 65 | 70 (0.29 mm) | 92.4 | 135 | 100.2 |
| A3 | 68 | 25 | 18 | 15 | 0.3 | 20 | 65 | 70 (0.29 mm) | 89.3 | 145 | 100.2 |
| A4 | 68 | 5 | 58 | 15 | 0.3 | 20 | 65 | 70 (0.29mm) | 92.1 | 140 | 100.2 |
| A5 | 68 | 5 | 58 | 15 | 0.3 | 30 | 65 | 70 (0.29mm) | 92.1 | 135 | 100.2 |
| A6 | 53 | 20 | 13 | 15 | 0.3 | 20 | 50 | 70 (0.29 mm) | 89.2 | 145 | 100.2 |
| A7 | 53 | 5 | 43 | 15 | 0.3 | 20 | 50 | 70 (0.29 mm) | 92.0 | 140 | 100.2 |
| A8 | 53 | 5 | 43 | 15 | 0.3 | 30 | 50 | 70 (0.29 mm) | 92.0 | 140 | 100.2 |
| A9 | 53 | 5 | 43 | 15 | 0.3 | 40 | 50 | 70 (0.29 mm) | 92.0 | 135 | 100.2 |
| A10 | 53 | 5 | 43 | 15 | 0.3 | 50 | 50 | 70 (0.29 mm) | 92.0 | 135 | 100.2 |
| A11 | 68 | 20 | 28 | 15 | 0.3 | 20 | 65 | 40 (0.17 mm) | 90.2 | 145 | 100.2 |
| A12 | 68 | 20 | 28 | 15 | 0.3 | 20 | 65 | 50 (0.2 mm) | 90.1 | 145 | 100.2 |
| A13 | 68 | 20 | 28 | 15 | 0.3 | 20 | 65 | 80 (0.33 mm) | 89.9 | 145 | 100.2 |
| A14 | 68 | 20 | 28 | 15 | 0.3 | 20 | 65 | 100 (0.4 mm) | 89.9 | 145 | 100.2 |
| A15 | 68 | 20 | 28 | 15 | 0.2 | 20 | 65 | 70 (0.29 mm) | 89.9 | 145 | 100.1 |
| A16 | 68 | 20 | 28 | 15 | 1 | 20 | 65 | 70 (0.29 mm) | 90.6 | 145 | 100.7 |
| A17 | 68 | 20 | 28 | 15 | 5 | 20 | 65 | 70 (0.29 mm) | 94.3 | 145 | 103.3 |

(continued)

| battery | separator | | | | | | width Wn of negative electrode plate [mm] | amount of expansion of negative electrode plate [μm] (thickness of negative electrode: mm) | discharge capacity retention rate [%] | heating test short-circuit temperature Y [°C] | resistance increase rate [%] |
|---|---|---|---|---|---|---|---|---|---|---|---|
| | width Ws [mm] | width W1 [mm] | width W3 [mm] | total Ds [μm] | ave. thickness Dr of resin layer [μm] | shrinkage rate of separator [%] | | | | | |
| A18 | 68 | 20 | 28 | 15 | 7 | 20 | 65 | 70 (0.29 mm) | 96.2 | 145 | 104.7 |
| A19 | 68 | 20 | 28 | 12 | 7 | 20 | 65 | 70 (0.29 mm) | 96.2 | 145 | 104.8 |

[Table 2]

| battery | resin layer | W1/Ws [%] | ave. thickness Dr/ total Ds | ratio Q | ave. thickness Dr/ amount of expansion of negative electrode plate | W3/Wn | capacity retention rate [%] | temperature of constant bath temperature [°C] | resistance increase rate [%] |
|---|---|---|---|---|---|---|---|---|---|
| C1 | without resin layer | - | 0.00 | 0.0 | 0.000 | 0.00 | 85.2 | 135 | - |
| C2 | without resin layer | - | 0.00 | 0.0 | 0.000 | 0.00 | 85.3 | 135 | - |
| C3 | without resin layer | - | 0.00 | 0.0 | 0.000 | 0.00 | 85.5 | 135 | - |
| C4 | entire surface | - | 0.02 | 20.0 | 0.004 | 0.00 | 85.2 | 150 | 100.2 |
| C5 | entire surface | - | 0.58 | 20.0 | 0.100 | 0.00 | 85.3 | 150 | 104.8 |
| A1 | only part of | 29.4 | 0.02 | 11.8 | 0.004 | 0.43 | 90.0 | 145 | 100.2 |
| A2 | only part of | 4.4 | 0.02 | 1.8 | 0.004 | 0.95 | 92.4 | 135 | 100.2 |
| A3 | only part of | 36.8 | 0.02 | 14.7 | 0.004 | 0.28 | 89.3 | 145 | 100.2 |
| A4 | only part of | 7.4 | 0.02 | 2.9 | 0.004 | 0.89 | 92.1 | 140 | 100.2 |
| A5 | only part of | 7.4 | 0.02 | 2.0 | 0.004 | 0.89 | 92.1 | 135 | 100.2 |
| A6 | only part of | 37.7 | 0.02 | 15.1 | 0.004 | 0.26 | 89.2 | 145 | 100.2 |
| A7 | only part of | 9.4 | 0.02 | 3.8 | 0.004 | 0.86 | 92.0 | 140 | 100.2 |
| A8 | only part of | 9.4 | 0.02 | 2.5 | 0.004 | 0.86 | 92.0 | 140 | 100.2 |

| battery | resin layer | W1/Ws [%] | ave. thickness Dr/ total Ds | ratio Q | ave. thickness Dr/ amount of expansion of negative electrode plate | W3/Wn | capacity retention rate [%] | temperature of constant bathtemperature [°C] | resistance increase rate [%] |
|---|---|---|---|---|---|---|---|---|---|
| A9 | only part of | 9.4 | 0.02 | 1.9 | 0.004 | 0.86 | 92.0 | 135 | 100.2 |
| A10 | only part of | 9.4 | 0.02 | 1.5 | 0.004 | 0.86 | 92.0 | 135 | 100.2 |
| A11 | only part of | 29.4 | 0.02 | 11.8 | 0.008 | 0.43 | 90.2 | 145 | 100.2 |
| A12 | only part of | 29.4 | 0.02 | 11.8 | 0.006 | 0.43 | 90.1 | 145 | 100.2 |
| A13 | only part of | 29.4 | 0.02 | 11.8 | 0.004 | 0.43 | 89.9 | 145 | 100.2 |
| A14 | only part of | 29.4 | 0.02 | 11.8 | 0.003 | 0.43 | 89.9 | 145 | 100.2 |
| A15 | only part of | 29.4 | 0.01 | 11.8 | 0.003 | 0.43 | 89.9 | 145 | 100.1 |
| A16 | only part of | 29.4 | 0.07 | 11.8 | 0.014 | 0.43 | 90.6 | 145 | 100.7 |
| A17 | only part of | 29.4 | 0.33 | 11.8 | 0.071 | 0.43 | 94.3 | 145 | 103.3 |
| A18 | only part of | 29.4 | 0.47 | 11.8 | 0.100 | 0.43 | 96.2 | 145 | 104.7 |
| A19 | only part of | 29.4 | 0.58 | 11.8 | 0.100 | 0.43 | 96.2 | 145 | 104.8 |

EP 4 322 308 A1

Batteries C1 to C5 are batteries of Comparative Examples. Batteries A1 to A19 are batteries according to the present disclosure. As shown in the tables, the capacity retention rates of the batteries A1 to A19 were higher than those of the batteries C1 to C5. This is presumably because the fluidity of the liquid electrolyte was enhanced due to the space present in the third region. The batteries A1 to A19 exhibited a heat resistance equal to or higher than that of the batteries C1 to C3 having no resin layer. By setting the value of W1/Ws (value of W2/Ws) to 30% or less (e.g., 29.4% or less), the capacity retention rate can be increased, and the cycle characteristics can be improved. On the other hand, by setting the value of W1/Ws (value of W2/Ws) to 10% or more, the heat resistance of the battery can be improved. Moreover, by setting the ratio Q to 2.5 or more, the heat resistance of the battery can be improved. When the W1/Ws value (W2/Ws value) was set in the range of 10 to 30% and the ratio Q was set to 2.5 or more, both the cycle characteristics and the heat resistance were excellent. Among the batteries A1 to A19, in the batteries in which the value of (average thickness Dr of resin layer)/(total Ds of average thickness of substrate and average thickness of inorganic filler layer) was 0.47 or less (e.g., less than 0.47), the resistance increase rate was low. In view of lowering the resistance increase rate, the value of Dr/Ds is preferably in the range of 0.01 to 0.33, more preferably in the range of 0.01 to 0.07.

It is preferable that the value of (average thickness Dr of resin layer)/(amount of expansion of negative plate) is set to 0.004 or more (e.g., 0.006 or more). Expansion of the negative electrode may cause the space to be reduced and worsen the fluidity of the liquid electrolyte. This phenomenon, however, can be mitigated by providing a resin layer having a certain thickness or more, and as a result, the cycle characteristics can be improved. By setting the width W3 of the third region to 0.4 times or more as large as the width Wn of the negative electrode plate, the capacity retention rate can be particularly increased.

[Industrial Applicability]

The present disclosure is applicable to a separator and a cylindrical secondary battery.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

| | |
|---|---|
| 10 : | battery |
| 11 : | positive electrode plate |
| 12 : | negative electrode plate |
| 14 : | electrode plate group |
| 15 : | case body |
| 50 : | separator |
| 50a : | first long side |
| 50b : | second long side |
| 51 : | substrate |
| 53 : | inorganic filler layer |
| 54 : | resin layer |
| 54e : | resin layer |
| 54s : | gap |
| 61 : | first region |
| 62 : | second region |
| 63 : | third region |
| 64 : | fourth region |

**Claims**

1.  A separator of a belt shape having first and second long sides, the separator comprising:

    a substrate;
    an inorganic filler layer laminated on the substrate and containing an inorganic filler as a major component; and

a resin layer laminated on part of the inorganic filler layer and containing a resin as a major component, wherein at least part of the resin layer is formed in a first region of a belt shape and a second region of a belt shape; the first and second regions extend adjacent to the first and second long sides, respectively; and a portion where the resin layer is not formed is present in a third region between the first region and the second region.

2.  The separator according to claim 1, wherein a proportion of an area where the resin layer is formed in the first and second regions is higher than a proportion of an area where the resin layer is formed in the third region.

3.  The separator according to claim 1 or 2, wherein a width of the first region and a width of the second region are each 30% or less of a width of the separator.

4.  The separator according to any one of claims 1 to 3, wherein

    the third region includes a fourth region of a belt shape extending parallel to the first region, and
    the resin layer is formed in the fourth region.

5.  The separator according to any one of claims 1 to 3, wherein the resin layer is not formed in the third region.

6.  The separator according to any one of claims 1 to 5, wherein an average thickness of the resin layer is 0.47 times or less as large as a sum of an average thickness of the substrate and an average thickness of the inorganic filler layer.

7.  The separator according to any one of claims 1 to 6, wherein a proportion of an area where the resin layer is formed in the first and second regions is in a range of 5 to 100%.

8.  The separator according to any one of claims 1 to 6, wherein

    the resin layer is formed over entire surfaces of the first region and the second region, and
    a sum Wr (mm) of a width of the first region and a width of the second region, a width Ws (mm) of the separator, and a shrinkage rate R (%) of the separator in a width direction of the separator when heated at 200 °C for 10 minutes satisfy $(R/100) \times Ws \times 0.25 \leq Wr$.

9.  The separator according to any one of claims 1 to 8, wherein the resin layer has voids.

10. A cylindrical secondary battery, comprising:

    a battery case including a case body having a bottomed cylindrical shape; and an electrode plate group and an electrolyte that are disposed in the case body, wherein
    the electrode plate group is formed by winding a positive electrode plate, a negative electrode plate, and a separator, with the separator disposed between the positive electrode plate and the negative electrode plate, and
    the separator is the separator according to any one of claims 1 to 9.

11. The cylindrical secondary battery according to claim 10, wherein an average thickness of the resin layer of the separator is at least 0.004 times or more as large as a difference Dn between an average thickness of the negative electrode plate in a fully charged state and an average thickness of the negative electrode plate in a discharged state.

12. The cylindrical secondary battery according to claim 10 or 11, wherein the cylindrical secondary battery is a non-aqueous electrolyte secondary battery.

## FIG. 1A

## FIG. 1B

## FIG. 2

## FIG. 3

## FIG. 4

## FIG. 5

## FIG. 6

## FIG. 7

*FIG. 8*

## FIG. 9

## INTERNATIONAL SEARCH REPORT

International application No.

**PCT/JP2022/010607**

### A. CLASSIFICATION OF SUBJECT MATTER

*H01M 50/451*(2021.01)i; *H01M 10/0587*(2010.01)i; *H01M 50/414*(2021.01)i; *H01M 50/434*(2021.01)i; *H01M 50/443*(2021.01)i; *H01M 50/457*(2021.01)i; *H01M 50/489*(2021.01)i

FI: H01M50/451; H01M50/457; H01M50/443 M; H01M50/489; H01M10/0587; H01M50/414; H01M50/434

According to International Patent Classification (IPC) or to both national classification and IPC

### B. FIELDS SEARCHED

Minimum documentation searched (classification system followed by classification symbols)

H01M50/451; H01M10/0587; H01M50/414; H01M50/434; H01M50/443; H01M50/457; H01M50/489

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-522553 A (LG CHEM, LTD.) 28 July 2016 (2016-07-28) claims 22-24, paragraphs [0026]-[0034], [0040]-[0068], [0073]-[0081] | 1-7, 9-12 |
| A | | 8 |
| X | KR 10-2016-0126343 A (LG CHEM, LTD.) 02 November 2016 (2016-11-02) paragraphs [0033]-[0085], fig. 1, 2a, 2c | 1-7, 10, 12 |
| A | | 8-9, 11 |
| A | JP 2014-505344 A (LG CHEM, LTD.) 27 February 2014 (2014-02-27) | 1-12 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 May 2022** | **24 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/010607**

| Patent document cited in search report | | | Publication date (day/month/year) | Patent family member(s) | | | Publication date (day/month/year) |
|---|---|---|---|---|---|---|---|
| JP | 2016-522553 | A | 28 July 2016 | US | 2015/0263324 | A1 | |
| | | | | claims 22-24, paragraphs [0036]-[0046], [0053]-[0087], [0092]-[0101] | | | |
| | | | | WO | 2015/047034 | A1 | |
| | | | | EP | 2894694 | A1 | |
| | | | | KR | 10-2015-0037643 | A | |
| | | | | CN | 105556702 | A | |
| KR | 10-2016-0126343 | A | 02 November 2016 | (Family: none) | | | |
| JP | 2014-505344 | A | 27 February 2014 | US | 2014/0050965 | A1 | |
| | | | | US | 2015/0349312 | A1 | |
| | | | | WO | 2012/111956 | A2 | |
| | | | | EP | 2677590 | A2 | |
| | | | | KR | 10-2012-0093772 | A | |
| | | | | CN | 103477491 | A | |

Form PCT/ISA/210 (patent family annex) (January 2015)

**EP 4 322 308 A1**

**REFERENCES CITED IN THE DESCRIPTION**

**Patent documents cited in the description**

- JP 2006525624 A
- JP 2016201327 A
- JP 2020064879 A